# EUROPÄISCHE PATENTSCHRIFT

(11) **EP 2 427 264 B1**
(45) Veröffentlichungstag und Bekanntmachung des Hinweises auf die Patenterteilung: **04.10.2017**
(21) Anmeldenummer: 10718887.2
(22) Anmeldetag: 03.05.2010
(51) Int. Cl.: B01D 63/08, B01D 61/36, C02F 1/04

(54) **MEMBRANDESTILLATIONSVORRICHTUNG UND VERFAHREN UNTER DESSEN VERWENDUNG**
MEMBRANE DISTILLATION DEVICE AND PROCESS USING THE SAME
DISPOSITIF DE DISTILLATION MEMBRANAIRE ET PROCÉDÉ UTILISANT LEDIT DISPOSITIF

(30) Priorität: 06.05.2009 DE 102009020179
(43) Veröffentlichungstag der Anmeldung: 14.03.2012
(73) Patentinhaber: Stumpf-Fels, Dennis, 86343 Königsbrunn (DE)
(72) Erfinder: SCHARFE, Juergen, 85435 Erding (DE)
(74) Vertreter: Boura, Olivier
(86) Internationale Anmeldenummer: PCT/EP2010/002690
(87) Internationale Veröffentlichungsnummer: WO 2010/127819

(56) Entgegenhaltungen:
- EP-B1- 0 094 543
- WO-A1-2007/054311
- US-A- 3 340 186
- US-A- 3 406 096
- US-A- 3 878 054
- US-A- 4 476 024
- SCHNEIDER K ET AL: "MEMBRANDESTILLATION" CHEMIE INGENIEUR TECHNIK, WILEY VCH. VERLAG, WEINHEIM, DE LNKD- DOI:10.1002/CITE.330560703, Bd. 56, Nr. 7, 1. Januar 1984 (1984-01-01) , Seiten 514-521, XP000867616 ISSN: 0009-286X

## Beschreibung

Die Erfindung betrifft eine Membrandestillationsvorrichtung, die eine oder mehrere mehrstufige Membrandestillationsmodule mit jeweils einem Verdampfer, wenigstens zwei, insbesondere wenigstens zehn Kondensations- und Verdampfungsstufen und einem Kondensator umfasst, wobei eine jeweilige Kondensations- und Verdampfungsstufe einen Dampfraum, einen Flüssigkeitskanal für eine aufzukonzentrierende Flüssigkeit, eine den Dampfraum vom Flüssigkeitskanal trennende Kondensationswand und eine den Flüssigkeitskanal auf der der Kondensationswand gegenüberliegenden Seite begrenzende Membranwand umfasst. Eine Vorrichtung dieser Art ist aus der WO 2007/054311 bekannt. Ferner betrifft die Erfindung ein Verfahren unter Verwendung einer Membrandestillationsvorrichtung.

Bei einer solchen Membrandestillationsvorrichtung wird unter Einsatz von thermischer Energie Flüssigkeit verdampft und wieder kondensiert. Beim Verdampfen der Flüssigkeit, bei der es sich um ein Gemisch unterschiedlicher Flüssigkeiten, eine Lösung oder Emulsion handeln kann, verdampfen bei gegebener Temperatur die jeweiligen Bestandteile bei einem von dieser Temperatur abhängigen Dampfdruck, so dass einzelne Bestandteile auskondensiert werden können.

Bei den herkömmlichen klassischen Destillationsverfahren befindet sich der Dampf in einem Raum über der zu verdampfenden Flüssigkeit und wird dann an einer gekühlten Fläche auskondensiert. Im Gegensatz dazu wird bei einer Membrandestillationsvorrichtung der oben genannten Art die zu verdampfende Flüssigkeit vom Dampfraum durch eine mikroporöse, dampfdurchlässige, jedoch flüssigkeitsundurchlässige Membran getrennt. Durch Temperatur- bzw. Dampfunterschiede zwischen der aufzukonzentrierenden Flüssigkeit und dem Dampfraum entsteht an der Grenzfläche zwischen der aufzukonzentrierenden Flüssigkeit und der Membran Dampf, der durch die Membran hindurchtritt. Es wird hier also ein Membrandestillationsverfahren angewandt.

Es existieren unterschiedliche verfahrenstechnische Varianten von Membrandestillationsverfahren, denen allen die Trennung der verschiedenen Phasen und/oder Fluide durch selektiv permeable Membranen gemeinsam ist.

Bei einer in der DE 42 44 823 C2 beschriebenen Vorrichtung wird die aufzukonzentrierende Flüssigkeit durch Hohlfäden aus flüssigkeitsdichtem, jedoch dampfdurchlässigem Material gepumpt. Der durch die Wandungen der Hohlfäden austretende Dampf kondensiert an als Kondensator dienenden Hohlfäden aus wasser- und dampfundurchlässigem Material.

In der DE 31 40 614 C2 ist eine Vorrichtung beschrieben, bei der Hohlplatten mit aus selektiven Membranen bestehenden Hauptflächen Hohlplatten gegenüberstehen, deren Hauptflächen aus undurchlässigen Folien bestehen, wobei zwischen den verschiedenen Hohlplatten durch einen jeweiligen Abstandshalter ein Luftspalt definiert ist. Der aus den Membranflächen austretende Dampf kondensiert an den Folienflächen.

Bei den zuletzt genannten bekannten Verfahren erfolgt die Wasserführung nach dem Prinzip des bekannten so genannten "MSF"-Verfahrens, bei dem die notwendige Verdampfungsenthalpie vom zu verdampfenden Fluid aufgebracht werden muss, so dass bestenfalls ein Destillat/Fluid-Verhältnis von etwa 1 : 20 erreichbar ist. Um diesen hohen Volumenstrom zu bewältigen, müssen die fluidführenden Kanäle entsprechend voluminös ausgeführt werden, woraus geringere spezifische Wärmedurchgänge und damit eine geringere Effizienz resultieren. Zudem muss für einen solchen hohen Volumenstrom eine entsprechend hohe Pumpleistung aufgebracht werden.

Bei der aus der WO 2007/054311 bekannten Membrandestillationsvorrichtung der eingangs genannten Art wird die Verdampfungsenthalpie zwar nicht durch die aufzulconzentrierende Flüssigkeit, sondern durch den Dampf übertragen. Die Führung der aufzukonzentrierenden Flüssigkeit sowie der Energie folgen dem bekannten so genannten "MEH"-Prozess, woraus folgt, dass wesentlich geringere Flüsse der aufzukonzentrierenden Flüssigkeit erforderlich sind. Bei dieser bekannten Vorrichtung müssen jedoch die Dampfströme einer jeweiligen Kondensations- und Verdampfungsstufe über einen zusätzlichen besonderen Dampfkanal in die nächste Stufe überführt werden. Diese zusätzlichen Dampfkanäle müssen zur Begrenzung der Strömungswiderstände entsprechend voluminös ausgeführt werden. Der konstruktive Aufwand hierfür ist relativ groß.

Weitere herkömmliche Membrandestillationsvorrichtungen sind aus US 3 340 186 A und US 4 476 024 A bekannt.

Der Erfindung liegt die Aufgabe zugrunde, eine verbesserte Membrandestillationsvorrichtung der eingangs genannten Art zu schaffen, bei der die zuvor erwähnten Nachteile beseitigt sind. Dabei sollen insbesondere eine Reduzierung der Ströme der aufzukonzentrierenden Flüssigkeit sowie des Dampfs erreicht werden.

Diese Aufgabe wird durch ein Verfahren nach Anspruch 1 sowie durch eine Membrandestillationsvorrichtung nach Anspruch 2 gelöst. Weitere vorteilhafte Ausführungsformen sind Gegenstand der rückbezogenen Unteransprüche.

Dabei grenzt eine jeweilige in Strömungsrichtung nachfolgende Kondensations- und Verdampfungsstufe mit ihrem Dampfraum unmittelbar an die Membranwand der in Strömungsrichtung vorangehenden Kondensations- und Verdampfungsstufe an und diese Membranwand trennt somit den Flüssigkeitskanal der vorangehenden Kondensations- und Verdampfungsstufe von dem Dampfraum der nachfolgenden Kondensations- und Verdampfungsstufe.

Aufgrund dieser Ausbildung werden die Ströme der aufzukozazentrierenden Flüssigkeit und des Dampfes deutlich verringert. Die Kondensationsenergie des Dampfs einer jeweiligen Kondensations- und Verdampfungsstufe erzeugt unmittelbar wieder Dampf in der nachfolgenden, auf einem geringeren Druck/Temperatur-Niveau liegenden Stufe. Der Dampfstrom wird dadurch reduziert, dass der Membranwand einer jeweiligen Kondensations- und Verdampfungsstufe die Kondensationswand der unmittelbar darauf folgenden Stufe gegenübersteht. Der durch die Membranwand strömende Dampf kondensiert somit an der dieser Membranwand gegenüberstehenden Kondensationsfläche der nachfolgenden Stufe, womit die bisher erforderliche Sammelleitung zur Überführung des Dampfes an die Kondensationswand der nächsten Stufe entfällt.

Erfindungsgemäß umfasst der Verdampfer einen Heizfluidkanal, einen Flüssigkeitskanal für die aufzukonzentrierende Flüssigkeit, eine den Beizfluidkanal vom Flüssigkeitskanal trennende Tauscherwand und eine den Flüssigkeitskanal auf der der Tauscherwand gegenüberliegenden Seite begrenzende Membranwand. Ferner grenzt eine erste Kondensations- und Verdampfungsstufe mit ihrem Dampfraum unmittelbar an die Membranwand des Verdampfers an und diese Membranwand trennt somit den Flüssigkeitskanal des Verdampfers von dem Dampfraum der ersten Kondensations- und Verdampfungsstufe.

Der Kondensator umfasst einen Dampfraum, einen Kühlfluidkanal und eine den Dampfraum vom Kühlfluidkanal trennende Kondensationswand und grenzt mit seinem Dampfraum unmittelbar an die Membranwand der letzten Kondensations- und Verdampfungsstufe an. Diese Membranwand trennt somit den Flüssigkeitskanal der letzten Kondensations- und Verdampfungsstufe von dem Dampfraum des Kondensators.

Bevorzugt ist zudem eine solche Ausführung, bei der Kondensation und Verdampfung in einem jeweiligen Membrandestillationsmodul zumindest im Wesentlichen inertgasfrei erfolgen.

Zweckmäßigerweise ist die aufzukonzentrierende Flüssigkeit zur Absenkung deren Absolutdrucks mit Unterdruck beaufschlagt, wobei der Absolutdruck der aufzukonzentrierenden Flüssigkeit in einem jeweiligen Flüssigkeitskanal bis zu dem der Flüssigkeitstemperatur in diesem Flüssigkeitskanal korrespondierenden Siededampfdruck abgesenkt ist.

Die Dampfräume der Kondensations- und Verdampfungsstufen und des Kondensators sind zur Absenkung deren Absolutdrucks unter den Umgebungsdruck zweckmäßigerweise mit Unterdruck beaufschlagt.

Gemäß einer bevorzugten praktischen Ausführungsform der erfindungsgemäßen Membrandestillationsvorrichtung ist der Absolutdruck in einem jeweiligen Dampfraum zumindest im Wesentlichen bis zum Dampfdruck der über die angrenzende Membranwand benachbarten aufzukonzentrierenden Flüssigkeit und zusätzlich um den sich beim Strömen des Dampfes durch die angrenzende Membranwand ergebenden Differenzdruck abgesenkt. Der Unterdruck in einem jeweiligen Dampfraum entspricht also zumindest im Wesentlichen dem Dampfdruck der über die angrenzende Membranwand benachbart aufzukonzentrierenden Flüssigkeit, erhöht durch den sich beim Strömen des Dampfs durch die Membranwand ergebenden Differenzdruck, wobei zu beachten ist, dass ein erhöhter Unterdruck einem abgesenkten Absolutdruck entspricht.

Die Flüssigkeitskanäle des Verdampfers und der Kondensations- und Verdampfungsstufen eines jeweiligen Membrandestillationsmoduls sind über Flüssigkeitsleitungen in Reihe geschaltet, wobei die aufzukonzentrierende Flüssigkeit dem Flüssigkeitskanal des Verdampfers über einen Vorlagebehälter zuführbar und insbesondere mittels einer Pumpe aus dem Flüssigkeitskanal der letzten Kondensations- und Verdampfungsstufe abführbar ist.

Insbesondere zur Entfernung eingetragenen Inertgases sind die Dampfräume der Kondensations- und Verdampfungsstufen und des Kondensators eines jeweiligen Membrandestillationsmoduls über Unterdruckverbindungsleitungen in Reihe geschaltet und der Dampfraum des Kondensators ist an eine Vakuumpumpe angeschlossen. Zweckmäßigerweise ist hierbei der Vorlagebehälter für die aufzukonzentrierende Flüssigkeit über eine Unterdruckverbindungsleitung mit dem Dampfraum der ersten Kondensations- und Verdampfungsstufe verbunden.

Von Vorteil ist insbesondere auch, wenn zur Abfuhr des an der Kondensationswand einer jeweiligen Kondensations- und Verdampfungsstufe anfallenden Destillats an den betreffenden Dampfraum ein Destillat-U-Rohr angeschlossen ist, das an den Dampfraum einer jeweiligen nachfolgenden Kondensations- und Verdampfungsstufe angeschlossene Destillat-U-Rohr mit dem an den Dampfraum der vorangehenden Kondensations- und Verdampfungsstufe angeschlossenem Destillat-U-Rohr verbunden ist, zur Abfuhr des an der Kondensationswand des Kondensators anfallenden

Destillats an dessen Dampfraum ein Destillatrohr angeschlossen ist und das an den Dampfraum der letzten Kondensations- und Verdampfungsstufe des betreffenden Membrandestillationsmoduls angeschlossene Destillat-U-Rohr mit dem an den Dampfraum des Kondensators angeschlossenen Destillatrohr verbunden ist, wobei das so zusammengeführte Destillat aus den Kondensations- und Verdampfungsstufen und dem Kondensator über eine Destillatpumpe abführbar ist.

Dabei sind bevorzugt das zusammengeführte Destillat insbesondere über ein Destillatsammelrohr einem Destillatsammelbehälter zugeführt und die Destillatpumpe an den Destillatsammelbehälter angeschlossen.

Die Membrandestillationsvorrichtung kann ein oder mehrere, vorzugsweise zumindest im Wesentlichen gleich aufgebaute mehrstufige Membrandestillationsmodule umfassen.

Gemäß einer bevorzugten Ausführungsform umfasst die Membrandestillationsvorrichtung zumindest zwei aufeinander folgende, zumindest im Wesentlichen spiegelbildlich aufgebaute mehrstufige Membrandestillationsmodule, die mit ihren Kondensatoren aneinander grenzen. Dabei können die beiden Kondensatoren insbesondere einen gemeinsamen Kühlfluidkanal besitzen.

Gemäß einer weiteren zweckmäßigen Ausführungsform besitzt die Membrandestillationsvorrichtung zumindest zwei aufeinander folgende, zumindest im Wesentlichen spiegelbildlich aufgebaute mehrstufige Membrandestillationsmodule, die mit ihren Verdampfern aneinander grenzen. Dabei können die beiden Verdampfer insbesondere einen gemeinsamen Heizfluidkanal besitzen.

Bevorzugt ist die aufzukonzentrierende Flüssigkeit mehreren mehrstufigen Membrandestillationsmodulen parallel zuführbar und/oder aus mehreren mehrstufigen Membrandestillationsmodulen parallel abführbar.

Zweckmäßigerweise ist das Destillat aus mehreren mehrstufigen Membrandestillationsmodulen über ein gemeinsames Destillatsammelrohr abführbar.

Die erfindungsgemäße Membrandestillationsvorrichtung kann also beispielsweise wie folgt ausgeführt sein:
Die Membrandestillationsvorrichtung arbeitet inertgasfrei. Der in einem Verdampfer an der Membranwand entstehende Dampf strömt quer durch den Dampfraum einer ersten Kondensations- und Verdampfungsstufe zu deren diesen Dampfraum begrenzenden Kondensationswand und kondensiert dort aus. An diese Kondensationswand grenzt an der dem Dampfraum gegenüberliegenden Seite ein Flüssigkeitskanal für die aufzukonzentrierende Flüssigkeit an, der auf der der entsprechenden Kondensationswand gegenüberliegenden Seite durch eine dampfdurchlässige, flüssigkeits- bzw. wasserdichte Membran begrenzt ist, durch die die aufzukonzentrierende Flüssigkeit vom Dampfraum der zweiten Kondensations- und Verdampfungsstufe getrennt ist. Der aus der aufzukonzentrierende Flüssigkeit entstehende Dampf tritt durch die Membranwand hindurch in den Dampfraum der zweiten Kondensations- und Verdampfungsstufe und strömt zu der diesen Dampfraum begrenzenden Kondensationswand dieser zweiten Stufe, um dort auszukondensieren.

In der nachgeschalteten zweiten Kondensations- und Verdampfungsstufe, die mit der ersten Stufe baugleich sein kann und die über eine Verbindungsleitung mit der aufzukonzentrierenden Flüssigkeit versorgt wird, wiederholt sich dieser Vorgang, und Dampf strömt in die dritte Kondensations- und Verdampfungsstufe. Dieser Vorgang setzt sich durch alle Stufen fort, und der Dampf, der durch die Membranwand der letzten Stufe in den Dampfraum des Kondensators strömt, kondensiert an dessen Kondensatwand.

Kondensation und Verdampfung in einer jeweiligen nachgeschalteten Stufe können inertgasfrei auf einem niedrigeren Druck- und Temperaturniveau erfolgen.

Je nach zur Verfügung stehendem Energieangebot in Form der Temperatur und des Flusses des Heizfluids und des zur Verfügung stehenden Abwärmeniveaus kann eine entsprechende Anzahl von Kondensations- und Verdampfungsstufen vorgesehen sein.

Der an einer jeweiligen Membranwand entstehende Dampf kann direkt an einer jeweiligen gegenüberliegenden Kondensationswand kondensieren.

Das insbesondere durch die Zufuhr der aufzukonzentrierenden Flüssigkeit und eventuelle Undichtigkeiten eingetragene Inertgas kann über eine durch eine Unterdruckverbindungsleitung mit dem Dampfraum des Kondensators verbundene Vakuumpumpe, den als Kühlfalle verwendeten Kondensator und die Unterdruckverbindungsleitungen zwischen dem Kondensator und der letzten Kondensations- und Verdampfungsstufe und zwischen den verschiedenen Kondensations- und Verdampfungsstufen aus sämtlichen Kondensations- und Verdampfungsstufen und dem Vorlagebehälter aus der Membrandestillationsvorrichtung entfernt werden.

Das in den aufeinander folgenden Kondensations- und Verdampfungsstufen auf einem jeweils niedrigeren Druckniveau anfallende Destillat kann über Destillatrohre zusammengeführt, in einem Destillatsammelbehälter gesammelt und über eine Destillatpumpe aus dem System gepumpt werden.

Es können mehrere jeweils mehrstufige Membrandestillationsmodule beispielsweise so angeordnet werden, dass sich ein Modul mit dem jeweils nachfolgenden Modul Heizfluidanschlüsse bzw. Kühlfluidanschlüsse teilen.

Die aufzukonzentrierende Flüssigkeit kann über Leitungen parallel auf die Module, beispielsweise drei Module, verteilt und über eine Leitung gesammelt und entsorgt werden. Das in den jeweiligen Modulen über die jeweiligen Destillatrohre anfallende Destillat kann über ein Destillatsammelrohr entsorgt werden.

Die Erfindung wird im Folgenden anhand von Ausführungsbeispielen unter Bezugnahme auf die Zeichnung näher beschrieben; in dieser zeigen:
- Fig. 1: eine schematische, auseinander gezogene Darstellung einer beispielhaften Ausführungsform eines Verdampfers,
- Fig. 2: eine schematische, auseinander gezogene Darstellung einer beispielhaften Ausführungsform einer Kondensations- und Verdampfungsstufe,
- Fig. 3: eine schematische, auseinander gezogene Darstellung einer beispielhaften Ausführungsform eines Kondensators,
- Fig. 4: eine schematische Darstellung einer beispielhaften Ausführungsform eines mehrstufigen Membrandestillationsmoduls einer Membrandestillationsvorrichtung und
- Fig. 5: eine schematische Darstellung einer beispielhaften Ausführungsform einer mehrere mehrstufige Membrandestillationsmodule umfassenden Membrandestillationsvorrichtung.

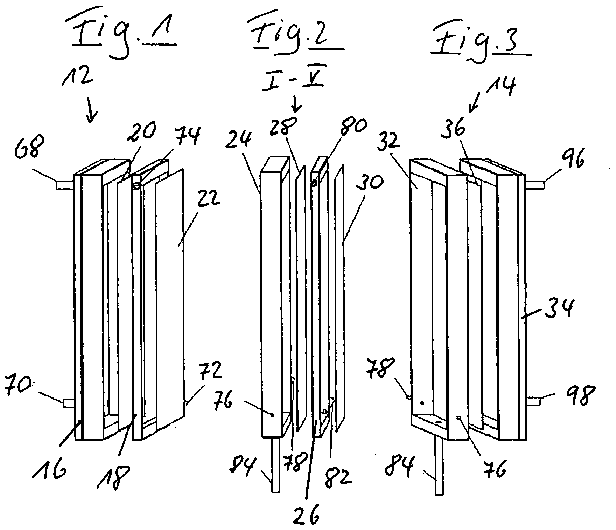

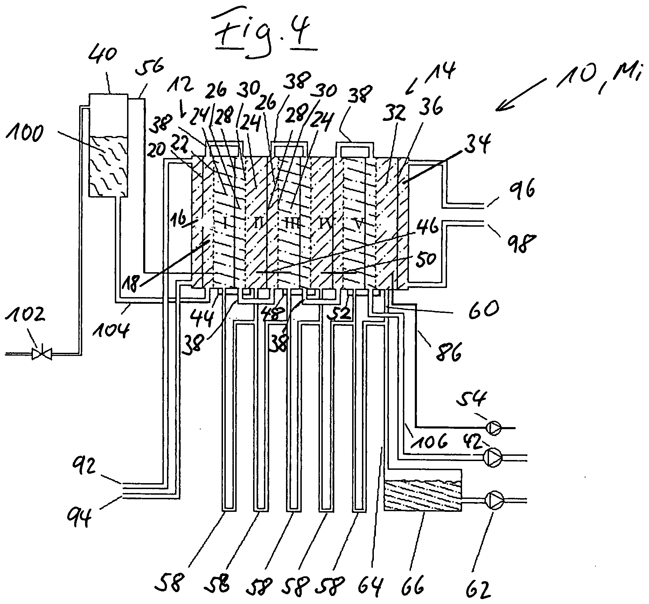

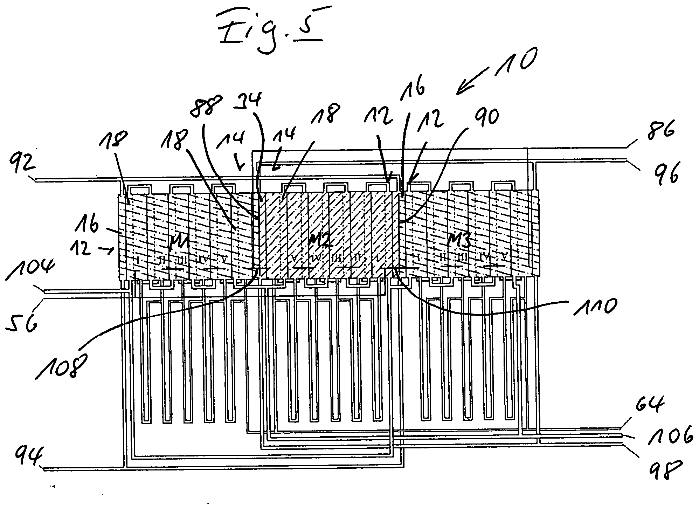

Eine Membrandestillationsvorrichtung 10 (vgl. insbesondere die Fig. 4 und 5) kann eine oder mehrere jeweils mehrstufige Membrandestillationsmodule Mi mit jeweils einem Verdampfer 12 (vgl. insbesondere Fig. 1), wenigstens zwei, insbesondere wenigstens zehn Kondensations- und Verdampfungsstufen I bis V (vgl. insbesondere die Fig. 2 und 4) und einem Kondensator (vgl. insbesondere die Fig. 3) umfassen.

Dabei zeigt Fig. 1 in schematischer auseinander gezogener Darstellung eine beispielhafte Ausführungsform eines Verdampfers 12, während in Fig. 2 in schematischer, auseinander gezogener Darstellung eine beispielhafte Ausführungsform einer Kondensations- und Verdampfungsstufe I bis V gezeigt ist. Fig. 3 zeigt in schematischer, auseinander gezogener Darstellung eine beispielhafte Ausführungsform eines Kondensators 14.

Wie insbesondere anhand der Fig. 1 zu erkennen ist, umfasst der Verdampfer 12 einen Heizfluidkanal 16, einen Flüssigkeitskanal 18 für die aufzukonzentrierende Flüssigkeit 100 (vgl. auch Fig. 4), eine den Heizfluidkanal 16 vom Flüssigkeitskanal 18 trennende Tauscherwand 20 und eine den Flüssigkeitskanal 18 auf der der Tauscherwand 20 gegenüberliegenden Seite begrenzende Membranwand 22.

Es sind zudem dem Heizfluidkanal 16 zugeordnete Anschlüsse 68, 70 für die Zufuhr bzw. Abfuhr des Heizfluids zu erkennen. Zudem sind dem Flüssigkeitskanal 18 zugeordnete Anschlüsse 72, 74 für die Zufuhr bzw. Abfuhr der aufzukonzentrierenden Flüssigkeit zu erkennen.

Gemäß Fig. 2 kann eine jeweilige Kondensations- und Verdampfungsstufe I bis V einen Dampfraum 24, einen Flüssigkeitskanal 26, für die aufzukonzentrierende Flüssigkeit, eine dem Dampfraum 24 vom Flüssigkeitskanal 26 trennende Kondensationswand 28 und eine den Flüssigkeitskanal 26 auf der der Kondensationswand 28 gegenüberliegenden Seite begrenzende Membranwand 30 umfassen.

In der Fig. 2 sind zudem dem Dampfraum 24 zugeordnete Unterdruckanschlüsse 76, 78 und dem Flüssigkeitskanal 26 zugeordnete Anschlüsse 80, 82 für die Zufuhr bzw. Abfuhr der aufzukonzentrierenden Flüssigkeit zu erkennen.

Überdies ist in dieser Fig. 2 ein dem Dampfraum 24 zugeordneter Destillatablauf 84 dargestellt.

Gemäß Fig. 3 kann der Kondensator 14 insbesondere einen Dampfraum 32, einen Kühlfluidkanal 34 und eine den Dampfraum 32 vom Kühlfluidkanal 34 trennende Kondensationswand 36 umfassen.

In dieser Fig. 3 sind überdies dem Dampfraum 32 zugeordnete Unterdruckanschlüsse 76, 78 sowie ein ebenfalls diesem Dampfraum 32 zugeordneter Destillatablauf 84 zu erkennen. Schließlich sind dem Kühlfluidkanal 34 zugeordnete Anschlüsse 96, 98 für die Zufuhr bzw. Abfuhr von Kühlfluid dargestellt.

Fig. 4 zeigt in schematischer Darstellung eine beispielhafte Ausführungsform eines mehrstufigen Membrandestillationsmoduls Mi der Membrandestillationsvorrichtung 10. Dabei können der Verdampfer 12, die Kondensations- und Verdampfungsstufen I bis V und der Kondensator 14 insbesondere so aufgebaut sein, wie dies anhand der Fig. 1 bis 3 beschrieben wurde.

Gemäß Fig. 4 grenzt eine jeweilige nachfolgende Kondensations- und Verdampfungsstufe I bis V mit ihrem Dampfraum 24 unmittelbar an die Membranwand 30 der vorangehenden Kondensations- und Verdampfungsstufe I bis V an. Diese Membranwand 30 trennt somit den Flüssigkeitskanal 26 der vorangehenden Kondensations- und Verdampfungsstufe I bis V von dem Dampfraum 24 der nachfolgenden Kondensations- und Verdampfungsstufe I bis V.

Zudem grenzt die erste Kondensations- und Verdampfungsstufe I mit ihrem Dampfraum 24 unmittelbar an die Membranwand 22 des Verdampfers 12 an. Diese Membranwand 22 trennt somit den Flüssigkeitskanal 18 des Verdampfers 12 von dem Dampfraum 24 der ersten Kondensations- und Verdampfungsstufe I.

Der Kondensator 14 grenzt mit seinem Dampfraum 32 unmittelbar an die Membranwand 30 der letzten Kondensations- und Verdampfungsstufe V an. Diese Membranwand 30 trennt somit den Flüssigkeitskanal 26 der letzten Kondensations- und Verdampfungsstufe V von dem Dampfraum 32 des Kondensators 14.

Kondensation und Verdampfung in einem jeweiligen Membrandestillationsmodul Mi können zumindest im Wesentlichen inertgasfrei und in einer jeweiligen nachfolgenden Kondensations- und Verdampfungsstufe I bis V auf einem niedrigeren Druck- und Temperaturniveau als in der vorangehenden Kondensations- und Verdampfungsstufe I bis V erfolgen.

Die aufzukonzentrierende Flüssigkeit kann zur Absenkung deren Absolutdrucks mit Unterdruck beaufschlagt sein, wobei der Absolutdruck der aufzukonzentrierenden Flüssigkeit in einem jeweiligen Flüssigkeitskanal 18, 26 vorzugsweise bis zu dem der Flüssigkeitstemperatur in diesem Flüssigkeitskanal 18, 26 korrespondierenden Siededampfdruck abgesenkt ist.

Die Dampfräume 24, 32 sind zur Absenkung deren Absolutdrucks unter den Umgebungsdruck vorteilhafterweise mit Unterdruck beaufschlagt.

Der Absolutdruck in einem jeweiligen Dampfraum 24, 32 ist bevorzugt zumindest im Wesentlichen bis zum Dampfdruck der über die angrenzende Membranwand 22, 30 benachbarten aufzukonzentrierenden Flüssigkeit und zusätzlich um den sich beim Strömen des Dampfes durch die angrenzende Membranwand 22, 30 ergebenden Differenzdruck abgesenkt.

Die Flüssigkeitskanäle 18, 26 des Verdampfers 12 und der Kondensations- und Verdampfungsstufen I bis V eines jeweiligen Membrandestillationsmoduls Mi sind beispielsweise über Flüssigkeitsleitungen 38 in Reihe geschaltet. Dabei kann die aufzukonzentrierende Flüssigkeit dem Flüssigkeitskanal 18 des Verdampfers 12 insbesondere über einen Vorlagebehälter 40 zuführbar und insbesondere mittels einer Pumpe 42 aus dem Flüssigkeitskanal 26 der letzten Kondensations- und Verdampfungsstufe V abführbar sein.

Insbesondere zur Entfernung eingetragenen Inertgases können die Dampfräume 24, 32 der Kondensations- und Verdampfungsstufen I bis V und des Kondensators 14 eines jeweiligen Membrandestillationsmoduls Mi über Unterdruckverbindungsleitungen 44 bis 52 in Reihe geschaltet sein. Der Dampfraum 32 des Kondensators 14 kann an eine Vakuumpumpe 54 angeschlossen sein. Der Vorlagebehälter 40 für die aufzukonzentrierende Flüssigkeit kann über eine Unterdruckverbindungsleitung 56 mit dem Dampfraum 24 der ersten Kondensations- und Verdampfungsstufe I verbunden sein. Wie anhand der Fig. 4 zu erkennen ist, kann der Dampfraum 32 des Kondensators 14 über eine Unterdruckverbindungsleitung 86 mit der Vakuumpumpe 54 verbunden sein.

Zur Abfuhr des an der Kondensationswand 28 einer jeweiligen Kondensations- und Verdampfungsstufe I bis V anfallenden Destillats kann an den betreffenden Dampfraum 24 ein Destillat-U-Rohr 58 angeschlossen sein. Das an den Dampfraum 24 einer jeweiligen nachfolgenden Kondensations- und Verdampfungsstufe I bis V angeschlossene Destillat-U-Rohr 58 kann mit dem an den Dampfraum 24 der vorangehenden Kondensations- und Verdampfungsstufe I bis V angeschlossenen Destillat-U-Rohr 58 verbunden sein.

Zur Abfuhr des an der Kondensatwand 36 des Kondensators 14 anfallenden Destillats kann an dessen Dampfraum 32 ein Destillatrohr 60 angeschlossen sein. Das an den Dampfraum der letzten Kondensations- und Verdampfungsstufe I bis V des betreffenden Membrandestillationsmoduls Mi angeschlossene Destillat-U-Rohr 58 kann mit dem an den Dampfraum 32 des Kondensators 14 angeschlossenen Destillatrohr 60 verbunden sein. Das so zusammengeführte Destillat aus den Kondensations- und Verdampfungsstufen I bis V und dem Kondensator 14 ist insbesondere über eine Destillatpumpe 62 abführbar. Dabei können das zusammengeführte Destillat insbesondere über ein Destillatsammelrohr 64 einem Destillatsammelbehälter 66 zugeführt und die Destillatpumpe 62 an den Destillatsammelbehälter 66 angeschlossen sein.

Wie der Fig. 4 entnommen werden kann, kann der Heizfluidkanal 16 des Verdampfers 12 für die Zufuhr und Abfuhr des Heizfluids mit Anschlussleitungen 92 bzw. 94 verbunden sein. Der Kühlfluidkanal 34 des Kondensators 14 kann für die Zufuhr und Abfuhr des Kühlfluids mit Anschlussleitungen 96 bzw. 98 verbunden sein. Die aufzukonzentrierende Flüssigkeit 100 kann dem Vorlagebehälter 40 über ein Einlassventil 102 zugeführt werden.

Die Membrandestillationsvorrichtung 10 kann, wie bereits erwähnt, ein oder mehrere, vorzugsweise zumindest im Wesentlichen gleich aufgebaute mehrstufige Membrandestillationsmodule Mi umfassen.

Fig. 5 zeigt in schematischer Darstellung eine beispielhafte Ausführungsform einer mehrere jeweils mehrstufige Membrandestillationsmodule Mi umfassenden Membrandestillationsvorrichtung 10, wobei im vorliegenden Fall beispielsweise drei solche Membrandestillationsmodule M1 bis M3 vorgesehen sind. Grundsätzlich ist jedoch eine beliebige andere Anzahl von Membrandestillationsmodule Mi denkbar.

Wie anhand der Fig. 5 zu erkennen ist, kann die Membrandestillationsvorrichtung 10 insbesondere zumindest zwei aufeinander folgende, zumindest hinsichtlich der relativen Anordnung der verschiedenen, den Verdampfer, die Kondensations- und Verdampfungsstufen und den Kondensator umfassenden Stufen spiegelbildlich aufgebaute mehrstufige Membrandestillationsmodule M2, M3 umfassen, die mit ihren Kondensatoren 14 aneinander grenzen. Dabei können die beiden Kondensatoren 14 einen gemeinsamen Kühlfluidkanal 34 besitzen. In dem gemeinsamen Kühlfluidkanal 34 kann eine Verteilerwand 88 vorgesehen sein, über die dem gemeinsamen Kühlfluidkanal 34 zugeführtes Kühlfluid verteilt wird.

Alternativ oder zusätzlich kann die Membrandestillationsvorrichtung 10 auch zumindest zwei aufeinander folgende, zumindest hinsichtlich der relativen Anordnung der verschiedenen Stufen, spiegelbildlich aufgebaute mehrstufige Membrandestillationsmodule M1, M2 umfassen, die mit ihren Verdampfern 12 aneinander grenzen. Dabei können die beiden Verdampfer 12 einen gemeinsamen Heizfluidkanal 16 umfassen. Im gemeinsamen Heizfluidkanal 16 kann eine Verteilerwand 90 angeordnet sein, durch die dem gemeinsamen Heizfluidkanal 16 zugeführtes Heizfluid verteilt wird.

Wie anhand der Fig. 5 zudem zu erkennen ist, kann die aufzukonzentrierende Flüssigkeit mehreren mehrstufigen Membrandestillationsmodulen, hier beispielsweise den Modulen M1 bis M3, parallel zuführbar und/oder aus mehreren mehrstufigen Membrandestillationsmodulen M1 bis M3 parallel abführbar sein.

Das Destillat aus den verschiedenen mehrstufigen Membrandestillationsmodulen M1 bis M3 kann über ein gemeinsames Destillatsammelrohr 64 abgeführt werden.

Wie anhand der Fig. 5 zu erkennen ist, können die Anschlussleitungen 92, 94 für die Zufuhr bzw. Abfuhr des Heizfluids beispielsweise mit dem Heizfluidkanal 16 des Verdampfers der ersten Kondensations- und Verdampfungsstufe I und dem gemeinsamen Heizfluidkanal 16 der Verdampfer 12 der beiden Membrandestillationsmodule M2 und M3 verbunden sein.

Über eine Zuleitung 104 kann den Flüssigkeitskanälen 18 der Verdampfer 12 der Membrandestillationsmodule M1 bis M3 die aufzukonzentrierende Flüssigkeit zugeführt werden. Über eine Abfuhrleitung 106 kann die aufzukonzentrierende Flüssigkeit aus den Flüssigkeitskanälen der letzten Kondensations- und Verdampfungsstufen V der Membrandestillationsmodule M1 bis M3 abgeführt werden.

Über die Anschlussleitungen 96, 98 wird Kühlfluid den Kühlfluidkanälen der Kondensatoren der Membrandestillationsmodule M1 bis M3 zugeführt bzw. Kühlfluid aus diesen abgeführt.

Bei dem in der Fig. 4 dargestellten Membrandestillationsmodul können der Verdampfer 12, die Kondensations- und Verdampfungsstufen I-IV sowie der Kondensator 14 zumindest im Wesentlichen jeweils so ausgeführt sein, wie dies anhand der Fig. 1 bis 3 beschrieben wurde.

Bei der Ausführung gemäß der Fig. 5 können die einzelnen Membrandestillationsstufen M1 bis M3 zumindest im Wesentlichen jeweils so ausgeführt sein, wie dies anhand der Fig. 4 beschrieben wurde.

In einem jeweiligen Membrandestillationsmodul Mi kann also das die Verdampfungsenergie liefernde Heizfluid über die Anschlussleitung 92 zugeführt werden. Sie steht dann über die Tauscherwand 20 in thermischem Kontakt mit der aufzukonzentrierenden Flüssigkeit 100, die über die Anschlüsse 72, 74 (vgl. Fig. 1) durch den Flüssigkeitskanal 18 für die aufzukonzentrierende Flüssigkeit strömt. Dabei wird über den sensiblen Wärmeübertrag die aufzukonzentrierende Flüssigkeit aufgeheizt, wonach das Heizfluid den Verdampfer 12 über den Anschluss 70 verlässt.

Über die Unterdruckanschlüsse 76, 78 der Kondensations- und Verdampfungsstufen I - V und des Kondensators 14 (vgl. Fig. 2 und 3) wird das Inertgas durch alle Dampfräume hindurch über den als Kühlfalle dienenden Kondensator 14 über die Vakuumpumpe 54 evakuiert, wobei sich der durch die jeweilige Kondensationswand 28 vorgegebenen Temperatur entsprechende Dampfdruck einstellt. Die Temperatur der aufzukonzentrierenden Flüssigkeit 100, die über die Anschlüsse 80, 82 durch den jeweiligen Flüssigkeitskanal 26 fließt, ist kälter als die Temperatur der aufzukonzentrierenden Flüssigkeit im Verdampfer 12, so dass der Dampfdruck über der Kondensationswand 28 geringer ist als der Dampfdruck über der Membranwand 22 des Verdampfers 12 und der Dampf von der Membranwand 22 zur Kondensationswand 28 der ersten Kondensations- und Verdampfungsstufe I strömt und dort kondensiert.

Durch den inertgasfreien Betrieb siedet die aufzukonzentrierende Flüssigkeit in von der Tauscherwand 20 und der Membranwand 28 begrenzten Flüssigkeitskanal 26, und, vorgegeben durch die noch kältere Temperatur der nachfolgenden Kondensations- und Verdampfungsstufe bzw. des Kondensators, auch die aufzukonzentrierende Flüssigkeit im von der Kondensationswand 28 und der Membranwand 30 der ersten Stufe I begrenzten Flüssigkeitskanal 26, wodurch eine Temperaturpolarisation an der Tauscherwand 20 und eine Konzentrations- und Temperaturpolarisation an der Membranwand 22 verhindert wird. Das anfallende Destillat wird über den Destillatablauf 84 aus dem Dampfraum 24 entfernt.

Das Kühlfluid durchströmt über die Anschlüsse 96, 98 den Kühlfluidkanal 34 des Kondensators 14 (vgl. Fig. 3). Der Dampf aus der auf einem höheren Temperaturniveau liegenden Dampfraum 32 des Kondensators 14 kondensiert an dessen Kondensationswand 36. Die dabei frei werdende Kondensationsenergie wird an das dahinter strömende Kühlfluid übertragen. Über die Unterdruckanschlüsse 76, 78 wird das im System anfallende Inertgas, über die Vakuumpumpe 54 entsorgt. Das anfallende Destillat wird über den Destillatablauf 84 aus dem Kondensator 14 entfernt.

Über die Vakuumpumpe 54 kann also das durch die über das Einlassventil 102 (vgl. Fig. 4) nachströmende aufzukonzentrierende Flüssigkeit 100 eingetragene Inertgas wieder aus der Membrandestillationsvorrichtung 10 entfernt werden. Dazu kann der über die Vakuumpumpe 54 erzeugte Unterdruck über die Unterdruckverbindungsleitung 86 an den Unterdruckanschluss 76 des Kondensators 14 angelegt werden. Über den Unterdruckanschluss 78 wird der Unterdruck über die Unterdruckverbindungsleitung 52 auf den entsprechenden Unterdruckanschluss der vorangehenden Kondensations- und Verdampfungsstufe angelegt. Von dort führt vom gegenüberliegenden Unterdruckanschluss die Unterdruckverbindungsleitung 50 zur vorangehenden Kondensations- und Verdampfungsstufe. Dieses Durchschleifen des Unterdrucks setzt sich über die Unterdruckverbindungsleitungen 48 bis 54 und 56 fort bis zum Vorlagebehälter 40, so dass die gesamte Membrandestillationsvorrichtung 10 bei entsprechender Auslegung der Vakuumpumpe 54 inertgasfrei gepumpt wird und in der Vorrichtung stets der den jeweiligen Temperaturen entsprechende Dampfdruck des Wassers vorherrscht.

Über das Einlassventil 102 wird die aufzukonzentrierende Flüssigkeit 100 durch den anliegenden Unterdruck in den Vorlagebehälter 40 gesaugt. Die Pumpe 42 saugt die aufzukonzentrierende Flüssigkeit 100 über die Zuführleitung 104 durch den Flüssigkeitskanal 18 des Verdampfers 12 weiter über die Flüssigkeitsleitung 38 in den Flüssigkeitskanal 26 der ersten Kondensations- und Verdampfungsstufe I und über eine weitere Flüssigkeitsleitung 38 in die nächste Kondensations- und Verdampfungsstufe II und auf diesem Weg weiter bis zur letzten Kondensations- und Verdampfungsstufe V, und über die Abfuhrleitung 106 zur Pumpe 42, die die auf diesem Weg aufzukonzentrierende Flüssigkeit aus dem Unterdruck in den Umgebungsdruck pumpt.

Durch die Inertgasfreiheit herrscht in jedem der Dampfräume der zum jeweiligen Temperaturniveau gehörende Dampfdruck, so dass beginnend beim Verdampfer 12 in jeder nachfolgenden Kondensations- und Verdampfungsstufe I bis V bis zum Kondensator 14 ein niedrigerer Druck herrscht, und zwar der mit der jeweiligen Temperatur korrespondierende Dampfdruck. Durch das Fehlen eines Inertgases siedet die aufzukonzentrierende Flüssigkeit 100 in den die aufzukonzentrierende Flüssigkeit führenden Flüssigkeitskanälen, wodurch eine Temperatur- und Konzentrationspolarisation verhindert wird.

Die Energie für den Verdampfungsprozess wird durch das über die Anschlussleitung 92 zugeführte und über die Anschlussleitung 94 abfließende Heizmedium bereitgestellt, das über den sensiblen Wärmeübertrag durch die Tauscherwand 20 die aufzukonzentrierende Flüssigkeit 100 im Flüssigkeitskanal 18 des Verdampfers 12 zum Sieden bringt. Der entstehende Dampf strömt durch die Membran 22 in den Dampfraum 24 der nachfolgenden Kondensations- und Verdampfungsstufe I und kondensiert an der Kondensationsfläche 28 dieser ersten Stufe. Das Destillat läuft über den Destillatablauf 84 ab. Die durch die Kondensation freigewordene Energie heizt die aufzukonzentrierende Flüssigkeit 100 dieser Kondensations- und Verdampfungsstufe I auf, so dass sie aufgrund des geringeren Drucks im nachfolgenden Dampfraum 24 der Kondensations- und Verdampfungsstufe II aufsiedet und dieser Dampf durch die Membranwand 30 dieser zweiten Stufe II strömt und an der Kondensationswand 28 dieser nachfolgenden Kondensations- und Verdampfungsstufe II auskondensiert. Dort erfolgt wieder eine Erwärmung der aufzukonzentrierenden Flüssigkeit 100, wobei der dabei entstehende Dampf in den Dampfraum 24 der darauf folgenden Kondensations- und Verdampfungsstufe III strömt. Dieser Prozess setzt sich bis zur Kondensationswand 36 des Kondensators 14 fort.

Die Kühlung des Kondensators 14 erfolgt durch das über die Anschlussleitung 96 einströmende und über die Anschlussleitung 98 ausströmende Kühlfluid.

Das an der Kondensationswand 28 der ersten Kondensations- und Verdampfungsstufe I anfallende Destillat läuft in das zugeordnete Destillat-U-Rohr 58, das, wenn es gefüllt ist, in das Destillat-U-Rohr 58 der folgenden Kondensations- und Verdampfungsstufe II überläuft, und weiter durch die Destillat-U-Rohre 58 der weiteren Kondensations- und Verdampfungsstufen III bis V, bis das Destillat dann über das Destillatsammelrohr 64 in den Destillatsammelbehälter 66 läuft, der über die Destillatpumpe 62 entleert wird. Diese U-Rohr-Konstruktion zum Sammeln des Destillats ist im vorliegenden Fall erforderlich, da die verschiedenen Stufen auf unterschiedlichem Druckniveau arbeiten und bei einer direkten Verbindung des jeweiligen Destillatablaufs 84 der Kondensations- und Verdampfungsstufen I bis V mit dem Destillatablauf 84 des Kondensators 14 die Verbindungsleitung durch den höheren Druck der Stufen freigedrückt würde, so dass der Dampf dann durch die freie Verbindungsleitung den Weg des geringsten Widerstandes direkt zum Kondensator als dem kühlsten Punkt nehmen würde, womit die Mehrstufigkeit hinfällig wäre. Ein weiterer Vorteil dieser U-Rohr-Konstruktion besteht darin, dass das aus einer jeweiligen Stufe kommende Destillat, wenn es auf das Druckniveau der nachfolgenden Stufe gebracht wird, aufgrund seiner höheren Temperatur aufsiedet bis es auf dem Niveau der nachfolgenden Stufe ist und der Dampf über den Destillatanschluss dieser nachfolgenden Stufe nach oben steigt und an deren Kondensationswand kondensiert, womit diese Energie dem mehrstufigen Prozess wieder zur Verfügung steht.

Während in der Fig. 5 eine beispielhafte Ausführung einer Zusammenschaltung von z.B. drei mehrstufigen Membrandestillationsmodulen M1 bis M3 gezeigt ist, ist grundsätzlich auch eine beliebige andere Anzahl von Membrandestillationsmodulen Mi denkbar.

Beim in der Fig. 5 dargestellten Ausführungsbeispiel folgt auf das Membrandestillationsmodul M1 in direktem Kontakt mit dessen Kondensator 14 der Kondensator 14 des Membrandestillationsmoduls M2, dessen Stufenanordnung spiegelbildlich zum Membrandestillationsmodul M1 ist, so dass die Kondensatoren der Module M1 und M2 über die gleichen Anschlussleitungen 96, 98 mit Kühlfluid versorgt werden. Auf das Membrandestillationsmodul M2 folgt in direktem Kontakt mit dessen Verdampfer 12 der Verdampfer 12 des Membrandestillationsmoduls M3, dessen Stufenanordnung spiegelbildlich zum Membrandestillationsmodul M2, also gleich dem des Membrandestillationsmoduls M1 ist, so dass die Verdampfer 12 der Membrandestillationsmodule M2 und M3 über die gleichen Anschlussleitungen 92, 94 mit Heizfluid versorgt werden können. Der Verdampfer 12 des Membrandestillationsmoduls M1 wird parallel zu dem Verdampferpaar 12 der Membrandestillationsmodule M2 und M3 versorgt, und der Kondensator 14 des Membrandestillationsmoduls M3 wird parallel zum Kondensatorenpaar 14 der Membrandestillationsmodule M1 und M2 versorgt.

Das über die jeweiligen Destillat-U-Rohre der einzelnen Membrandestillationsmodule M1 bis M3 gesammelte Destillat kann über das Destillatsammelrohr 64 gemeinsam entsorgt werden.

Die einzelnen Membrandestillationsmodule M1 bis M3 werden parallel über die Zufuhrleitung 104 und die Abfuhrleitung 106 mit der aufzukonzentrierenden Flüssigkeit versorgt.

Über die Unterdruckverbindungsleitung 86 können die Dampfräume der Kondensatoren 14 der Membrandestillationsmodule M1 bis M3 mit der Vakuumpumpe 54 verbunden sein. Wie anhand der Fig. 5 zu erkennen ist, können die Dampfräume der beiden aneinander grenzenden Kondensatoren 14 der beiden Membrandestillationsmodule M1 und M2 über eine Unterdruckverbindungsleitung 108 miteinander verbunden sein.

Über die Unterdruckverbindungsleitung 56 können die Dampfräume 24 der ersten Kondensations- und Verdampfungsstufen I der Membrandestillationsmodule M1 bis M3 mit dem Vorlagebehälter 40 verbunden sein. Dabei kann, wie aus der Fig. 5 hervorgeht, die Unterdruckverbindungsleitung 56 außer an den Dampfraum 24 der ersten Kondensations- und Verdampfungsstufen I des Moduls I beispielsweise an den Dampfraum 24 der ersten Kondensations- und Verdampfungsstufe I nur eines M2 der beiden Module M2, M3 angeschlossen sein, wobei dieser Dampfraum 24 über eine Unterdruckverbindungsleitung 110 mit dem Dampfraum 24 der ersten Kondensations- und Verdampfungsstufe I des anderen Moduls M3 verbunden ist.

### Bezugszeichenliste

- 10: Membrandestillationsvorrichtung
- 12: Verdampfer
- 14: Kondensator
- 16: Heizfluidkanal
- 18: Flüssigkeitskanal des Verdampfers
- 20: Tauscherwand
- 22: Membranwand des Verdampfers
- 24: Dampfraum einer jeweiligen Kondensations- und Verdampfungsstufe
- 26: Flüssigkeitskanal einer jeweiligen Kondensations- und Verdampfungsstufe
- 28: Kondensationswand einer jeweiligen Kondensationsund Verdampfungsstufe
- 30: Membranwand einer jeweiligen Kondensations- und Verdampfungsstufe
- 32: Dampfraum des Kondensators
- 34: Kühlfluidkanal
- 36: Kondensationswand des Kondensators
- 38: Flüssigkeitsleitung
- 40: Vorlagebehälter
- 42: Pumpe
- 44: Unterdruckverbindungsleitung
- 46: Unterdruckverbindungsleitung
- 48: Unterdruckverbindungsleitung
- 50: Unterdruckverbindungsleitung
- 52: Unterdruckverbindungsleitung
- 54: Vakuumpumpe
- 56: Unterdruckverbindungsleitung
- 58: Destillat-U-Rohr
- 60: Destillatrohr
- 62: Destillatpumpe
- 64: Destillatsammelrohr
- 66: Destillatsammelbehälter
- 68: Anschluss
- 70: Anschluss
- 72: Anschluss
- 74: Anschluss
- 76: Unterdruckanschluss
- 78: Unterdruckanschluss
- 80: Anschluss
- 82: Anschluss
- 84: Destillatablauf
- 86: Unterdruckverbindungsleitung
- 88: Verteilerwand
- 90: Verteilerwand
- 92: Anschlussleitung
- 94: Anschlussleitung
- 96: Anschlussleitung
- 98: Anschlussleitung
- 100: aufzukonzentrierende Flüssigkeit
- 102: Einlassventil
- 104: Zuführleitung
- 106: Abfuhrleitung
- 108: Unterdruckverbindungsleitung
- 110: Unterdruckverbindungsleitung
- I - V: Kondensations- und Verdampfungsstufe
- M1 - M5: Membrandestillationsmodul

## Patentansprüche

1. Verfahren unter Verwendung einer Membrandestillationsvorrichtung (10), die eine mehrstufige oder mehrere jeweils mehrstufige Membrandestillationsmodule (M1 bis M3) mit jeweils einem Verdampfer (12), wenigstens zwei Kondensations- und Verdampfungsstufen (I bis V) und einem Kondensator (14) umfasst, wobei eine jeweilige Kondensations- und Verdampfungsstufe (I bis V) einen Dampfraum (24), einen Flüssigkeitskanal (26) für eine aufzukonzentrierende Flüssigkeit, eine den Dampfraum (24) vom Flüssigkeitskanal (26) trennende Kondensationswand (28) und eine den Flüssigkeitskanal (26) auf der der Kondensationswand (28) gegenüberliegenden Seite begrenzende Membranwand (30) umfasst, wobei Kondensation und Verdampfung in einer jeweiligen in Strömungsrichtung nachfolgenden Kondensations- und Verdampfungsstufe (I bis V) auf einem niedrigeren Druck- und Temperaturniveau als in der in Strömungsrichtung vorangehenden Kondensations- und Verdampfungsstufe (I bis V) erfolgen und wobei eine jeweilige in Strömungsrichtung vorangehende Kondensations- und Verdampfungsstufe (I bis V) Wärme an die in Strömungsrichtung nachfolgende Kondensations- und Verdampfungsstufe (I bis V) abgibt, wobei die Flüssigkeitskanäle (18, 26) der Kondensations- und Verdampfungsstufen (I bis V) eines jeweiligen Membrandestillationsmoduls (M1 bis M3) über Flüssigkeitsleitungen (38) in Reihe geschaltet sind und wobei die Dampfräume (24, 32) der Kondensations- und Verdampfungsstufen (I bis V) eines jeweiligen Membrandestillationsmoduls (M1 bis M3) über Unterdruckverbindungsleitungen (44 bis 52) in Reihe geschaltet sind,
**dadurch gekennzeichnet,**
**dass** eine jeweilige in Strömungsrichtung nachfolgende Kondensations- und Verdampfungsstufe (I bis V) mit ihrem Dampfraum (24) unmittelbar an die Membranwand (30) der in Strömungsrichtung vorangehenden Kondensations- und Verdampfungsstufe (I bis V) angrenzt und diese Membranwand (30) somit den Flüssigkeitskanal (26) der in Strömungsrichtung vorangehenden Kondensations- und Verdampfungsstufe (I bis V) von dem Dampfraum (24) der in Strömungsrichtung nachfolgenden Kondensations- und Verdampfungsstufe (I bis V) trennt.

2. Membrandestillationsvorrichtung (10), die eine oder mehrere mehrstufige Membrandestillationsmodule (M1 bis M3) mit jeweils einem Verdampfer (12), wenigstens zwei Kondensations- und Verdampfungsstufen (I bis V) und einem Kondensator (14) umfasst,
wobei eine jeweilige Kondensations- und Verdampfungsstufe (I bis V) einen Dampfraum (24), einen Flüssigkeitskanal (26) für eine aufzukonzentrierende Flüssigkeit, eine den Dampfraum (24) vom Flüssigkeitskanal (26) trennende Kondensationswand (28) und eine den Flüssigkeitskanal (26) auf der der Kondensationswand (28) gegenüberliegenden Seite begrenzende Membranwand (30) umfasst, wobei Kondensation und Verdampfung in einer jeweiligen in Strömungsrichtung nachfolgenden Kondensations- und Verdampfungsstufe (I bis V) auf einem niedrigeren Druck- und Temperaturniveau als in der in Strömungsrichtung vorangehenden Kondensations- und Verdampfungsstufe (I bis V) erfolgen,
wobei eine jeweilige in Strömungsrichtung vorangehende Kondensations- und Verdampfungsstufe (I bis V) Wärme an die in Strömungsrichtung nachfolgende Kondensations- und Verdampfungsstufe (I bis V) abgibt,
wobei der Kondensator (14) einen Dampfraum (24), einen Kühlfluidkanal (34) und eine den Dampfraum (32) vom Kühlfluidkanal (34) trennende Kondensationswand (36) umfasst,
wobei die Dampfräume (24, 32) der Kondensations- und Verdampfungsstufen (I bis V) und des Kondensators (14) eines jeweiligen Membrandestillationsmoduls (M1 bis M3) über Unterdruckverbindungsleitungen (44 bis 52) in Reihe geschaltet sind und der Dampfraum (32) des Kondensators (14) an eine Vakuumpumpe (54) angeschlossen ist,
**dadurch gekennzeichnet, dass**
eine jeweilige Kondensations- und Verdampfungsstufe (I bis V) mit ihrem Dampfraum (24) unmittelbar an die Membranwand (30) der in Strömungsrichtung vorangehenden Kondensations- und Verdampfungsstufe (I bis V) angrenzt und diese Membranwand (30) somit den Flüssigkeitskanal (26) der vorangehenden Kondensations- und Verdampfungsstufe (I bis V) von dem Dampfraum (24) der in Strömungsrichtung nachfolgenden Kondensations- und Verdampfungsstufe (I bis V) trennt,
der Verdampfer (12) einen Heizfluidkanal (16), einen Flüssigkeitskanal (18) für die aufzukonzentrierende Flüssigkeit, eine den Heizfluidkanal (16) vom Flüssigkeitskanal (18) trennende Tauscherwand (20) und eine den Flüssigkeitskanal (18) auf der der Tauscherwand (20) gegenüberliegenden Seite begrenzende Membranwand (22) umfasst und dass eine in Strömungsrichtung erste Kondensations- und Verdampfungsstufe (I) mit ihrem Dampfraum (24) unmittelbar an die Membranwand (22) des Verdampfers (12) angrenzt und diese Membranwand (22) somit den Flüssigkeitskanal (18) des Verdampfer (12) von dem Dampfraum (24) der in Strömungsrichtung ersten Kondensations- und Verdampfungsstufe (I) trennt,
der Kondensator (14) mit seinem Dampfraum (32) unmittelbar an die Membranwand (30) der in Strömungsrichtung letzten Kondensations- und Verdampfungsstufe (V) angrenzt und diese Membranwand (30) somit den Flüssigkeitskanal (26) der in Strömungsrichtung letzten Kondensations- und Verdampfungsstufe (V) von dem Dampfraum (32) des Kondensators (14) trennt,
die Flüssigkeitskanäle (18, 26) des Verdampfers (12) und der Kondensations- und Verdampfungsstufen (I bis V) eines jeweiligen Membrandestillationsmoduls (M1 bis M3) über Flüssigkeitsleitungen (3 8) in Reihe geschaltet sind, und
ein Vorlagebehälter (40) zum Zuführen der aufzukonzentrierenden Flüssigkeit mit dem Flüssigkeitskanal (18) des Verdampfers verbunden ist.

3. Membrandestillationsvorrichtung nach Anspruch 2, wobei die Membrandestillationsvorrichtung Mittel umfasst, sodass die aufzukonzentrierende Flüssigkeit zur Absenkung deren Absolutdruckes mit Unterdruck beaufschlagt ist, wobei der Absolutdruck der aufzukorizentrierenden Flüssigkeit in einem jeweiligen Flüssigkeitskanal (18, 26) bis zu dem der Flüssigkeitstemperatur in diesem Flüssigkeitskanal (18, 26) korrespondierenden Siededampfdruck abgesenkt ist.

4. Membrandestillationsvorrichtung nach einem der Ansprüche 2,3 wobei die Membrandestillationsvorrichtung Mittel umfasst, sodass die Dampfräume (24, 32) zur Absenkung deren Absolutdruckes unter den Umgebungsdruck mit Unterdruck beaufschlagt sind.

5. Membrandestillationsvorrichtung nach einem der Ansprüche 2-4, wobei eine Pumpe (42) zum Abführen der aufzukozazentrierenden Flüssigkeit mit dem Flüssigkeitskanal (26) der in Strömungsrichtung letzten Kondensations- und Verdampfungsstufe (V) verbunden ist.

6. Membrandestillationsvorrichtung nach einem der Ansprüche 2-5 wobei der Vorlagebehälter (40) über eine Unterdruckverbindungsleitung (56) mit dem Dampfraum (24) der in Strömungsrichtung ersten Kondensations- und Verdampfungsstufe (I) verbunden ist.

7. Membrandestillationsvorrichtung nach einem der Ansprüche 2-6,
wobei zur Abfuhr des an der Kondensationswand (28) einer jeweiligen Kondensations- und Verdampfungsstufe (I bis V) anfallenden Destillats an den betreffenden Dampfraum (24) ein Destillat-U-Rohr (58) angeschlossen ist, dass das an den Dampfraum (24) einer jeweiligen in Strömungsrichtung nachfolgenden Kondensations- und Verdampfungsstufe (I bis V) angeschlossene Destillat-U-Rohr (58) mit dem an den Dampfraum (24) der in Strömungsrichtung vorangehenden Kondensations- und Verdampfungsstufe (I bis V) angeschlossenen Destillat-U-Rohr (58) verbunden ist, dass zur Abfuhr des an der Kondensatwand (36) des Kondensators (14) anfallenden Destillats an dessen Dampfraum (32) ein Destillatrohr (60) angeschlossen ist, und dass das an den Dampfraum (24) der in Strömungsrichtung letzten Kondensations- und Verdampfungsstufe (I bis V) des betreffenden Membrandestillationsmoduls (M1 bis M3) angeschlossene Destillat-U-Rohr (58) mit dem an den Dampfraum (32) des Kondensators (14) angeschlossenen Destillatrohr (60) verbunden ist, wobei eine Destillatpumpe (62) zum Abführen des so zusammengeführten Destillats aus den Kondensations- und Verdampfungsstufen (I bis V) und dem Kondensator (14) vorgesehen ist.

8. Membrandestillationsvorrichtung nach Anspruch 7, wobei ein Destillatsammelrohr (64) zum Zuführen des zusammengeführten Destillats zu einem Destillatsammelbehälter (66) vorgesehen ist und die Destillatpumpe (62) an den Destillatsammelbehälter (66) angeschlossen ist.

9. Membrandestillationsvorrichtung nach einem der Ansprüche 2-8,
wobei diese mehrere, gleich aufgebaute mehrstufige Membrandestillationsmodule (M1 bis M3) umfasst.

10. Membrandestillationsvorrichtung nach Anspruch 9, wobei diese zumindest zwei aufeinanderfolgende, spiegelbildlich aufgebaute mehrstufige Membrandestillationsmodule (M2, M3) umfasst, die mit ihren Kondensatoren (14) aneinandergrenzen, wobei die beiden Kondensatoren (14) vorzugsweise einen gemeinsamen Kühlfluidkanal (34) besitzen.

11. Membrandestillationsvorrichtung nach Anspruch 9 oder 10, wobei diese zumindest zwei aufeinanderfolgende, spiegelbildlich aufgebaute mehrstufige Membrandestillationsmodule (M1, M2) umfasst, die mit ihren Verdampfern (12) aneinandergrenzen, wobei die beiden Verdampfer (12) einen gemeinsamen Heizfluidkanal (16) aufweisen.

12. Membrandestillationsvorrichtung nach einem der Ansprüche 2-11, weiterhin umfassend parallele Zuführungen für die aufzukonzentrierende Flüssigkeit zu mehreren mehrstufigen Membrandestillationsmodulen (M1 bis M3) und/oder eine parallele Abführung der aufzukonzentrierenden Flüssigkeit aus mehreren mehrstufigen Membrandestillationsmodulen (M1 bis M3).

13. Membrandestillationsvorrichtung nach einem der Ansprüche 2-12, weiterhin umfassend ein gemeinsames Destillatsammelröhr (64) zum Abführen des Destillats aus mehreren mehrstufigen Membrandestillationsmodulen (M1 bis M3).

## Claims

1. A method using a membrane distillation apparatus (10), comprising a multistage membrane distillation apparatus or several membrane distillation apparatuses, each of which are multistage, (M1 to M3), each having an evaporator (12), at least two condensation and evaporation stages (I to V), and a condenser (14), wherein a respective condensation and evaporation stage (I to V) comprises a vapor chamber (24), a fluid channel (26) for a fluid to be concentrated, a condensation wall (28) separating the vapor chamber (24) from the fluid channel (26), and a membrane wall (30) separating the fluid channel (26) on the side opposite condensation wall (28), wherein condensation and evaporation in a respective condensation and evaporation stage (I to V) downstream in the flow direction take place at a lower pressure and temperature level than in the condensation and evaporation stage (I to V) upstream in the flow direction, and wherein a respective condensation and evaporation stage (I to V) upstream in the flow direction emits heat to the condensation and evaporation stage (I to V) downstream in the flow direction, wherein the fluid channels (18, 26) of the condensation and evaporation stages (I to V) of a respective membrane distillation module (M1 to M3) are connected in series via fluid lines (38), and wherein the vapor chambers (24, 32) of the condensation and evaporation stages (I to V) of a respective membrane distillation module (M1 to M3) are connected in series via negative pressure connection lines (44 to 52),
**characterized in that**
a respective condensation and evaporation stage (I to V) downstream in the direction of flow, with its vapor chamber (24), directly adjoins the membrane wall (30) of the condensation and evaporation stage (I to V) upstream in the flow direction, said membrane wall (30) thereby separating the fluid channel (26) of the condensation and evaporation stage (I to V) upstream in the flow direction from the vapor chamber (24) of the condensation and evaporation stage (I to V) downstream in the flow direction.

2. A membrane distillation apparatus (10), comprising one or several multistage membrane distillation apparatuses (M1 to M3), each having an evaporator (12), at least two condensation and evaporation stages (I to V), and a condenser (14),
wherein a respective condensation and evaporation stage (I to V) comprises a vapor chamber (24), a fluid channel (26) for a fluid to be concentrated, a condensation wall (28) separating the vapor chamber (24) from the fluid channel (26), and a membrane wall (30) separating the fluid channel (26)) on the side opposite condensation wall (28), wherein condensation and evaporation in a respective condensation and evaporation stage (I to V) downstream in the flow direction take place at a lower pressure and temperature level than in the condensation and evaporation stage (I to V) upstream in the flow direction,
wherein a respective condensation and evaporation stage (I to V) upstream in the flow direction emits heat to the condensation and evaporation stage (I to V) downstream in the flow direction,
wherein the condenser (14) comprises a vapor chamber (24), a cooling fluid channel (34), and a condensation wall (36) separating the vapor chamber (32) from the cooling fluid channel (34),
wherein the vapor chambers (24, 32) of the condensation and evaporation stages (I to V) and the condenser (14) of a respective membrane distillation module (M1 to M3) are connected in series via negative pressure connection lines (44 to 52), and the vapor chamber (32) of the condenser (14) is connected to a vacuum pump (54),
**characterized in that**
a respective condensation and evaporation stage (I to V), with its vapor chamber (24), directly adjoins the membrane wall (30) of the condensation and evaporation stage (I to V) upstream in the flow direction, said membrane wall (30) thereby separating the fluid channel (26) of the condensation and evaporation stage (I to V) upstream in the flow direction from the vapor chamber (24) of the downstream condensation and evaporation stage (I to V),
the evaporator (12) comprises a heating fluid channel (16), a fluid channel (18) for the fluid to be concentrated, an exchanger wall (20) separating the heating fluid channel (16) from the fluid channel (18), and a membrane wall (22) bounding the fluid channel (18) on the side opposite the exchanger wall (20), and **in that** a first condensation and evaporation stage (1) in the flow direction, with its vapor chamber (24), directly adjoins the membrane wall (22) of the evaporator (12), and this membrane wall (22) separates the fluid channel (18) of the evaporator (12) from the vapor chamber (24) of the first condensation and evaporation stage (1) in the flow direction,
the condenser (14), with its vapor chamber (32), directly adjoins the membrane wall (30) of the last condensation and evaporation stage (V) in the flow direction, said membrane wall (30) thereby separating the fluid channel (26) of the of the last condensation and evaporation stage (V) in the flow direction from the vapor chamber (32) of the condenser (14),
the fluid channels (18, 26) of the evaporator (12) and condensation and evaporation stages (I to V) of a respective membrane distillation module (M1 to M3) are connected in series via fluid lines (38), and
a storage container (40) for supplying the fluid to be concentrated is connected to the fluid channel (18) of the evaporator.

3. The membrane distillation apparatus according to claim 2, wherein the membrane distillation apparatus comprises means such that the fluid to be concentrated is pressurized with negative pressure in order to lower its absolute pressure, wherein the absolute pressure of the fluid to be concentrated in a respective fluid channel (18, 26) is lowered to the boiling vapor pressure corresponding to the fluid temperature in this fluid channel (18, 26).

4. The membrane distillation apparatus according to one of the claims 2 or 3, wherein the membrane distillation apparatus comprises means such that the vapor chambers (24, 32) are pressurized with negative pressure in order to lower their absolute pressure.

5. The membrane distillation apparatus according to any one of the claims 2-4, wherein a pump (42) for discharging the fluid to be concentrated is connected to the fluid channel (26) of the last condensation and evaporation stage (V) in the flow direction.

6. The membrane distillation apparatus according to any one of the claims 2-5, wherein the storage container (40) is connected to the vapor chamber (24) of the first condensation and evaporation stage (1) in the flow direction via a negative pressure connection line (56).

7. The membrane distillation apparatus according to any one of the claims 2-6, wherein
a distillate U-pipe (58) for removing the distillate accumulating on the condensation wall (28) of a respective condensation and evaporation stage (I to V) is connected to the respective vapor chamber (24), that the distillate U-pipe (58) connected to the vapor chamber (24) of a respective condensation and evaporation stage (I to V) downstream in the flow direction is connected to the distillate U-pipe (58) connected to the condensation and evaporation stage (I to V) upstream in the flow direction, that a distillate tube (60) for removing the distillate that is produced on the condensate wall (36) of the condenser (14) is connected to its vapor chamber (32), and that the distillate U-pipe (58) connected to the vapor chamber (24) of the last condensation and evaporation stage (I to V) of the respective membrane distillation module (M1 to M3) is connected to the distillation tube (60) connected to the vapor chamber (32) of the condenser (14), wherein a distillate pump (62) is provided for discharging the thus combined distillate from the condensation and evaporation stages (I to V) and the condenser (14).

8. The membrane distillation apparatus according to claim 7, wherein a distillate collecting tube (64) is provided for supplying the combined distillate to a distillate collecting container (66), and the distillate pump (62) is connected to the distillate collecting container (66).

9. The membrane distillation apparatus according to any one of the claims 2-8, wherein
the same comprises a plurality of identical multistage membrane distillation modules (M1 to M3).

10. The membrane distillation apparatus according to claim 9, wherein the same comprises at least two successive, mirror-image multistage membrane distillation modules (M2, M3), adjoining each other with their condensers (14), wherein the two condensers (14) preferably have a common cooling fluid channel (34).

11. The membrane distillation apparatus according to claim 9 or 10, wherein the same comprises at least two successive, mirror-image multistage membrane distillation modules (M2, M3), adjoining each other with their evaporators (12), wherein the two evaporators (12) have a common heating fluid channel (16).

12. The membrane distillation apparatus according to any one of the claims 2-11,
further comprising parallel supplies for the fluid to be concentrated to several multistage membrane distillation modules (M1 to M3) and/or a parallel discharge of the fluid to be concentrated from several multistage membrane distillation modules (M1 to M3).

13. The membrane distillation apparatus according to any one of the claims 2-12,
further comprising a common distillate collecting tube (64) for discharging the distillate from several multistage membrane distillation modules (M1 to M3).

## Revendications

1. Procédé utilisant un dispositif de distillation membranaire (10) qui comprend un module de distillation membranaire à plusieurs étages ou plusieurs modules de distillation membranaire à respectivement plusieurs étages (M1 à M3) avec respectivement un évaporateur (12), au moins deux étages de condensation et d'évaporation (I à V) et un condensateur (14), dans lequel un étage respectif de condensation et d'évaporation (I à V) comprend une chambre à vapeur (24), un tuyau de liquide (26) pour un liquide à concentrer, une paroi de condensation (28) séparant la chambre à vapeur (24) du tuyau de liquide (26) et une paroi membranaire (30) délimitant le tuyau de liquide (26) sur le côté opposé à la paroi de condensation (28), dans lequel condensation et évaporation ont lieu dans un étage de condensation et d'évaporation (I à V) succédant respectivement dans un sens de l'écoulement à un niveau de pression et de température inférieur à celui de l'étage de condensation et d'évaporation (I à V) précédant dans le sens de l'écoulement, et dans lequel un étage respectif de condensation et d'évaporation (I à V) précédant dans le sens de l'écoulement délivre de la chaleur à l'étage de condensation et d'évaporation (I à V) succédant dans le sens de l'écoulement, dans lequel les tuyaux de liquide (18, 26) des étages de condensation et d'évaporation (I à V) d'un module respectif de distillation membranaire (M1 à M3) sont montés en série via des conduites de liquide (38), et dans lequel les chambres à vapeur (24, 32) des étages de condensation et d'évaporation (I à V) d'un module respectif de distillation membranaire (M1 à M3) sont montées en série via des conduites de liaison sous pression (44 à 52),
**caractérisé en ce que**
un étage respectif de condensation et d'évaporation (I à V) succédant dans le sens de l'écoulement avec sa chambre à vapeur (24) est immédiatement adjacent à la paroi membranaire (30) de l'étage de condensation et d'évaporation (I à V) précédant dans le sens de l'écoulement, et ce faisant, cette paroi membranaire (30) sépare le tuyau de liquide (26) de l'étage de condensation et d'évaporation (I à V) précédant dans le sens de l'écoulement de la chambre à vapeur (24) de l'étage de condensation et d'évaporation (I à V) succédant dans le sens de l'écoulement.

2. Dispositif de distillation membranaire (10) qui comprend au moins un module de distillation membranaire à plusieurs étages (M1 à M3) avec respectivement un évaporateur (12), au moins deux étages de condensation et d'évaporation (I à V) et un condensateur (14),
dans lequel un étage respectif de condensation et d'évaporation (I à V) comprend une chambre à vapeur (24), un tuyau de liquide (26) pour un liquide à concentrer, une paroi de condensation (28) séparant la chambre à vapeur (24) du tuyau de liquide (26) et une paroi membranaire (30) délimitant le tuyau de liquide (26) sur le côté opposé à la paroi de condensation (28), dans lequel condensation et évaporation ont lieu dans un étage de condensation et d'évaporation (I à V) succédant respectivement dans le sens de l'écoulement à un niveau de pression et de température inférieur à celui de l'étage de condensation et d'évaporation (I à V) précédant dans le sens de l'écoulement,
dans lequel un étage respectif de condensation et d'évaporation (I à V) précédant dans le sens de l'écoulement délivre de la chaleur à l'étage de condensation et d'évaporation (I à V) succédant dans le sens de l'écoulement,
dans lequel le condensateur (14) comprend une chambre à vapeur (24), un tuyau de fluide réfrigéré (34) et une paroi de condensation (36) séparant la chambre à vapeur (32) du tuyau de fluide réfrigéré (34),
dans lequel les chambres à vapeur (24, 32) des étages de condensation et d'évaporation (I à V) et du condensateur (14) d'un module respectif de distillation membranaire (M1 à M3) sont montées en série via des conduites de liaison sous pression (44 à 52), et la chambre à vapeur (32) du condensateur (14) est raccordée à une pompe à vide (54),
**caractérisé en ce que**
un étage respectif de condensation et d'évaporation (I à V) avec sa chambre à vapeur (24) est immédiatement adjacent à la paroi membranaire (30) de l'étage de condensation et d'évaporation (I à V) précédant dans le sens de l'écoulement, et ce faisant, cette paroi membranaire (30) sépare le tuyau de liquide (26) de l'étage de condensation et d'évaporation (I à V) précédant de la chambre à vapeur (24) de l'étage de condensation et d'évaporation (I à V) succédant dans le sens de l'écoulement,
l'évaporateur (12) comprend un tuyau de fluide chauffé (16), un tuyau de liquide (18) pour le liquide à concentrer, une paroi d'échangeur (20) séparant le tuyau de fluide chauffé (16) du tuyau de liquide (18) et une paroi membranaire (22) délimitant le tuyau de liquide (18) sur le côté opposé à la paroi d'échangeur (20), et **en ce qu'**un premier étage de condensation et d'évaporation (I) dans le sens de l'écoulement avec sa chambre à vapeur (24) est immédiatement adjacent à la paroi membranaire (22) de l'évaporateur (12) et ce faisant, cette paroi membranaire (22) sépare le tuyau de liquide (18) de l'évaporateur (12) de la chambre à vapeur (24) du premier étage de condensation et d'évaporation (I) dans le sens de l'écoulement,
le condensateur (14) avec sa chambre à vapeur (32) est immédiatement adjacent à la paroi membranaire (30) du dernier étage de condensation et d'évaporation (V) dans le sens de l'écoulement et ce faisant, cette paroi membranaire (30) sépare le tuyau de liquide (26) du dernier étage de condensation et d'évaporation (V) dans le sens de l'écoulement de la chambre à vapeur (32) du condensateur (14),
les tuyaux de liquide (18, 26) de l'évaporateur (12) et des étages de condensation et d'évaporation (I à V) d'un module respectif de distillation membranaire (M1 à M3) sont montés en série via des conduites de liquide (38), et
un réservoir collecteur (40) pour amener le liquide à concentrer est relié au tuyau de liquide (18) de l'évaporateur.

3. Dispositif de distillation membranaire selon la revendication 2, dans lequel le dispositif de distillation membranaire comprend des moyens pour que le liquide à concentrer soit sollicité avec sous-pression pour abaisser sa pression absolue, dans lequel la pression absolue du liquide à concentrer est abaissée dans un tuyau de liquide (18, 26) respectif jusqu'à atteindre la pression de vapeur d'ébullition correspondant à la température de liquide dans ce tuyau de liquide (18, 26).

4. Dispositif de distillation membranaire selon l'une quelconque des revendications 2,3, dans lequel le dispositif de distillation membranaire comprend des moyens pour que les chambres à vapeur (24, 32) soient sollicitées avec sous-pression pour abaisser leur pression absolue sous la pression ambiante.

5. Dispositif de distillation membranaire selon l'une quelconque des revendications 2 à 4, dans lequel une pompe (42) pour évacuer le liquide à concentrer est reliée au tuyau de liquide (26) du dernier étage de condensation et d'évaporation (V) dans le sens de l'écoulement.

6. Dispositif de distillation membranaire selon l'une quelconque des revendications 2 à 5, dans lequel le réservoir collecteur (40) est relié via une conduite de liaison sous pression (56) à la chambre à vapeur (24) du premier étage de condensation et d'évaporation (I) dans le sens de l'écoulement.

7. Dispositif de distillation membranaire selon l'une quelconque des revendications 2 à 6, dans lequel
pour évacuer le distillat produit contre la paroi de condensation (28) d'un étage respectif de condensation et d'évaporation (I à V) un tube en U de distillat (58) est raccordé à la chambre à vapeur (24) concernée, que le tube en U de distillat (58) raccordé à la chambre à vapeur (24) d'un étage respectif de condensation et d'évaporation (I à V) succédant dans le sens de l'écoulement est relié au tube en U de distillat (58) raccordé à la chambre à vapeur (24) de l'étage respectif de condensation et d'évaporation (I à V) précédant dans le sens de l'écoulement, que pour évacuer le distillat produit contre la paroi de condensé (36) du condensateur (14) un tube de distillat (60) est raccordé à sa chambre à vapeur (32), et que le tube en U de distillat (58) raccordé à la chambre à vapeur (24) du dernier étage de condensation et d'évaporation (I à V) dans le sens de l'écoulement du module concerné de distillation membranaire (M1 à M3) est relié au tube de distillat (60) raccordé à la chambre à vapeur (32) du condensateur (14), dans lequel une pompe de distillat (62) est prévue pour évacuer le distillat ainsi rassemblé hors des étages de condensation et d'évaporation (I à V) et du condensateur (14).

8. Dispositif de distillation membranaire selon la revendications 7, dans lequel un tube récupérateur de distillat (64) est prévu pour amener le distillat rassemblé jusqu'à un réservoir de récupération de distillat (66) et la pompe de distillat (62) est raccordée au réservoir de récupération de distillat (66).

9. Dispositif de distillation membranaire selon l'une quelconque des revendications 2 à 8, dans lequel
celui-ci comprend plusieurs modules de distillation membranaire à plusieurs étages (M1 à M3) assemblés à l'identique.

10. Dispositif de distillation membranaire selon la revendication 9, dans lequel celui-ci comprend au moins deux modules de distillation membranaire à plusieurs étages (M2, M3) assemblés en se succédant et symétriquement, qui sont contigus entre eux par leurs condensateurs (14), dans lequel les deux condensateurs (14) possèdent de préférence un tuyau de fluide réfrigéré (34) commun.

11. Dispositif de distillation membranaire selon la revendication 9 ou 10, dans lequel celui-ci comprend au moins deux modules de distillation membranaire à plusieurs étages (M1, M2) assemblés en se succédant et symétriquement, qui sont contigus entre eux par leurs évaporateurs (12), dans lequel les deux évaporateurs (12) présentent un tuyau de fluide chauffé (16) commun.

12. Dispositif de distillation membranaire selon l'une quelconque des revendications 2 à 11,
comprenant en outre des amenées parallèles pour le liquide à concentrer vers plusieurs modules de distillation membranaire à plusieurs étages (M1 à M3) et/ou une évacuation parallèle du liquide à concentrer hors de plusieurs modules de distillation membranaire à plusieurs étages (M1 à M3).

13. Dispositif de distillation membranaire selon l'une quelconque des revendications 2 à 12,
comprenant en outre un tube récupérateur de distillat (64) commun pour évacuer le distillat hors de plusieurs modules de distillation membranaire à plusieurs étages (M1 à M3).
